# EUROPEAN PATENT APPLICATION

(11) **EP 4 742 508 A1**
(43) Date of publication of application: **13.05.2026**
(21) Application number: 24835803.8
(22) Date of filing: 23.05.2024
(51) Int. Cl.: H02K 5/24, H02K 7/14

(54) **AXIAL GAP MOTOR, BLOWER DEVICE, AND AIR CONDITIONER**

(30) Priority: 03.07.2023 JP 2023109473
(71) Applicant: Daikin Industries, Ltd., Osaka-shi, Osaka 530-0001 (JP)
(72) Inventor: TSUCHIYAMA, Kohei, Osaka-shi, Osaka 530-0001 (JP); TAKAYAMA, Yoshinori, Osaka-shi, Osaka 530-0001 (JP); ISHIMARU, Jun, Osaka-shi, Osaka 530-0001 (JP)
(74) Representative: Hoffmann Eitle
(86) International application number: PCT/JP2024/018933
(87) International publication number: WO 2025/009282

(57) **Abstract**

During driving of an axial gap-type motor, an abnormal noise having a peak of a sound pressure level at a frequency near a natural frequency of an air gap between a rotor and a stator is generated by minute vibration in an axial direction of the rotor. A motor (40) includes a rotor (50, 60) and a stator (70). The rotor (50, 60) has a disk shape. The stator (70) faces the rotor (50, 60) across an air gap (G1, G2) in the axial direction of the rotor (50, 60). The stator (70) includes a plurality of stator cores (71) and a coil (72) wound around each of the stator cores (71). A plurality of the stator cores (71) is annularly arranged when viewed from the axial direction of the rotor (50, 60). The rotor (50, 60) has a plurality of through holes (54, 64) penetrating in the axial direction of the rotor (50, 60). The plurality of through holes (54, 64) is provided on a radially inner side of the rotor (50, 60) with respect to the coils (72) when viewed from the axial direction of the rotor (50, 60).

## Description

### TECHNICAL FIELD

The present disclosure relates to an axial gap-type motor, a blower, and an air conditioner.

### BACKGROUND ART

Conventionally, as disclosed in Patent Literature 1 (JP 2006-353078 A), an axial gap-type motor including a rotor and a stator facing the rotor across an air gap in an axial direction of the rotor is known.

### SUMMARY OF THE INVENTION

### <Technical Problem>

In the axial gap-type motor, a space (air gap) between the rotor and the stator has a natural frequency. Therefore, during driving of the motor, due to minute vibration in the axial direction of the rotors, abnormal noise having a peak of a sound pressure level may occur at frequencies near the natural frequencies of the air gaps.

### <Solution to Problem>

An axial gap-type motor according to a first aspect includes a rotor and a stator. The rotor has a disk shape. The stator faces the rotor across an air gap in an axial direction of the rotor. The stator includes a plurality of stator cores and a coil wound around each of the stator cores. A plurality of the stator cores is annularly arranged when viewed from the axial direction of the rotor. The rotor has a plurality of through holes penetrating in the axial direction of the rotor. The plurality of through holes is provided on a radially inner side of the rotor with respect to the coil when viewed from the axial direction of the rotor.

In the axial gap-type motor according to the first aspect, the through holes are provided in a central portion of the rotor to make a natural frequency of the air gap larger than a predetermined frequency and decrease a sound pressure level at a frequency near the natural frequency in a case where the through holes are not provided. As a result, abnormal noise generated from the motor is reduced.

An axial gap-type motor according to a second aspect is the axial gap-type motor according to the first aspect, in which the plurality of through holes is provided in a first region having a circular shape centered on an axis of the rotor when viewed from the axial direction of the rotor. A radius of the first region is 40% or less of a radius of the rotor.

An axial gap-type motor according to a third aspect is the axial gap-type motor according to the first or second aspect, in which a first ratio that is a ratio of a total area of the plurality of through holes to an opening area of an outer edge portion of the air gap is 3% or more.

An axial gap-type motor according to a fourth aspect is the axial gap-type motor according to the third aspect, in which the first ratio is 10% or more.

An axial gap-type motor according to a fifth aspect is the axial gap-type motor according to the third aspect, in which the first ratio is 20% or more.

An axial gap-type motor according to a sixth aspect is the axial gap-type motor according to any one of the third to fifth aspects, in which the first ratio is 40% or less.

An axial gap-type motor according to a seventh aspect is the axial gap-type motor according to any one of the first to sixth aspects, in which the plurality of through holes is arranged along a circumference of a first circle such that a center of each of the through holes is located on the circumference of the first circle centered on the axis of the rotor when viewed from the axial direction of the rotor.

An axial gap-type motor according to an eighth aspect is the axial gap-type motor according to any one of the first to seventh aspects, and includes a pair of rotors and a stator sandwiched between the pair of rotors.

A blower according to a ninth aspect includes the axial gap-type motor according to any one of the first to eighth aspects and a fan driven by the axial gap-type motor.

An air conditioner according to a tenth aspect includes the blower according to the ninth aspect.

### BRIEF DESCRIPTION OF THE DRAWINGS

FIG. 1 is an external perspective view of a blower 100 according to a first embodiment.
FIG. 2 is an external perspective view of a first fan 20, a second fan 30, and a motor 40 according to the first embodiment.
FIG. 3 is a side view of the first fan 20, the second fan 30, and the motor 40 according to the first embodiment.
FIG. 4 is an exploded perspective view of the first fan 20, the second fan 30, and the motor 40 according to the first embodiment.
FIG. 5 is a plan view of a first rotor 50 according to the first embodiment.
FIG. 6 is an external perspective view of the first rotor 50 according to the first embodiment.
FIG. 7 is a plan view of a second rotor 60 according to the first embodiment.
FIG. 8 is an external perspective view of the second rotor 60 according to the first embodiment.
FIG. 9 is a plan view of a stator 70 according to the first embodiment.
FIG. 10 is an external perspective view of the stator 70 according to the first embodiment.
FIG. 11 is a sectional view of the motor 40 according to the first embodiment.
FIG. 12 is a diagram for describing a stationary wave having a natural frequency of a first air gap G1. FIG. 12 is a diagram showing a stationary wave in a case where the first rotor 50 does not have a through hole 54.
FIG. 13 is a diagram for describing a stationary wave having the natural frequency of the first air gap G1. FIG. 13 is a diagram showing a stationary wave in a case where the first rotor 50 has the through hole 54.
FIG. 14 is an example of measurement data indicating a relationship between a frequency of minute vibration applied to the first rotor 50 and a sound pressure level.
FIG. 15 is an example of measurement data of noise generated in a case where the motor 40 is driven.
FIG. 16 is an example of measurement data indicating a relationship between the number of through holes 54 and 64 and the sound pressure level.
FIG. 17 is a plan view of a first rotor 50 according to a second embodiment.
FIG. 18 is a plan view of a first rotor 50 according to a third embodiment.
FIG. 19 is a plan view of a first rotor 50 according to a fourth embodiment.
FIG. 20 is a plan view of a first rotor 50 according to Modification D-1.
FIG. 21 is a plan view of a first rotor 50 according to Modification D-2.
FIG. 22 is a plan view of a first rotor 50 according to Modification D-3.

### DESCRIPTION OF EMBODIMENTS

### -First embodiment-

### (1) Overall configuration of blower 100

A blower 100 according to a first embodiment of the present disclosure is used in, for example, an air conditioner. In this case, the air conditioner includes an indoor unit including the blower 100 and an outdoor unit connected to the indoor unit via a refrigerant circuit. The refrigerant circuit includes a compressor, a four-way switching valve, an outdoor heat exchanger, an electric expansion valve, an indoor heat exchanger, and an accumulator.

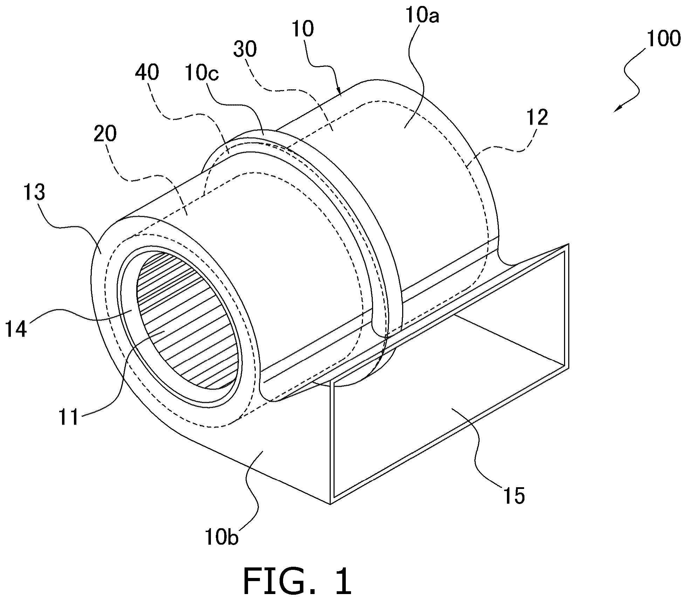

As shown in FIG. 1, the blower 100 includes a housing 10, a first fan 20, a second fan 30, and a motor 40. The first fan 20 and the second fan 30 are, for example, centrifugal fans such as sirocco fans.

The housing 10 includes a cylindrical portion 10a that accommodates the first fan 20 and the second fan 30, and a blow-out portion 10b protruding from the cylindrical portion 10a. In a longitudinal direction of the cylindrical portion 10a, a flange 13 having a first suction port 11 is provided at one end of the cylindrical portion 10a, and a flange (not shown) having a second suction port 12 is provided at the other end of the cylindrical portion 10a. A bell mouth 14 is provided in the first suction port 11 and the second suction port 12. In FIG. 1, only the bell mouth 14 in the first suction port 11 is shown. An annular motor fixing portion 10c is provided along a peripheral direction on an outer periphery of a central portion in the longitudinal direction of the cylindrical portion 10a. The blow-out portion 10b has a quadrangular pyramid shape that gradually expands outward along the peripheral direction of the cylindrical portion 10a. A blow-out port 15 is provided at an outer end of the blow-out portion 10b.

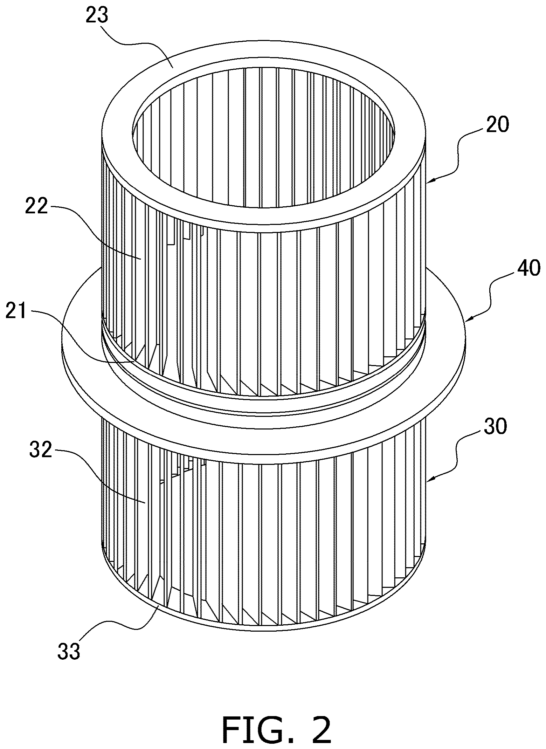

As shown in FIGS. 2 to 4, the first fan 20 includes a disk-shaped end plate 21, a plurality of blades 22, and an annular member 23. The plurality of blades 22 are connected to one surface of the end plate 21 and are arranged at intervals along a peripheral direction of the end plate 21. The annular member 23 is connected to an end of the plurality of blades 22 on an opposite side to a side to which the end plate 21 is connected.

As shown in FIGS. 2 to 4, the second fan 30 includes a disk-shaped end plate 31, a plurality of blades 32, and an annular member 33. The plurality of blades 32 are connected to one surface of the end plate 31 and are arranged at intervals along a peripheral direction of the end plate 31. The annular member 33 is connected to an end of the plurality of blades 32 on an opposite side to a side to which the end plate 31 is connected.

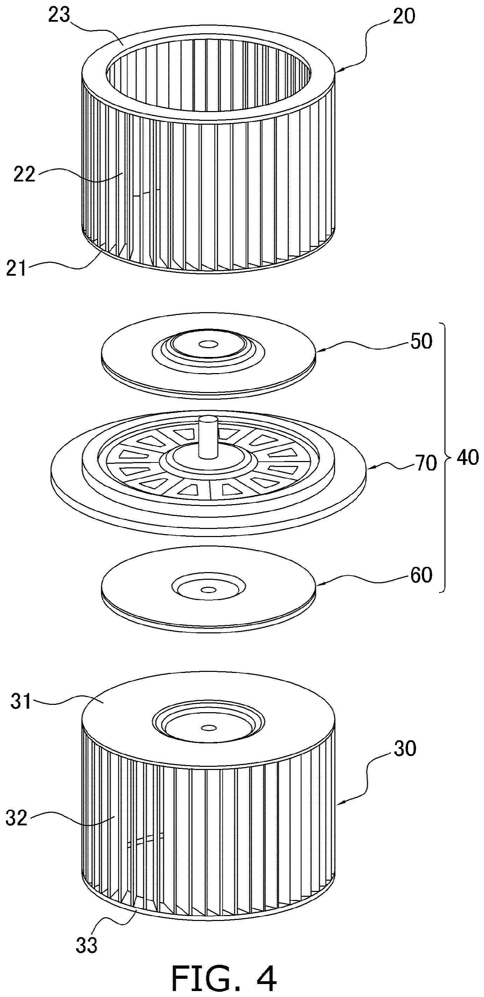

The motor 40 is an axial gap-type motor. As shown in FIG. 4, the motor 40 includes a disk-shaped first rotor 50, a disk-shaped second rotor 60, and a disk-shaped stator 70. Hereinafter, a direction along axes of the first rotor 50 and the second rotor 60 is referred to as an "axial direction". The stator 70 is disposed between the first rotor 50 and the second rotor 60 in the axial direction.

### (2) Detailed configuration of motor 40

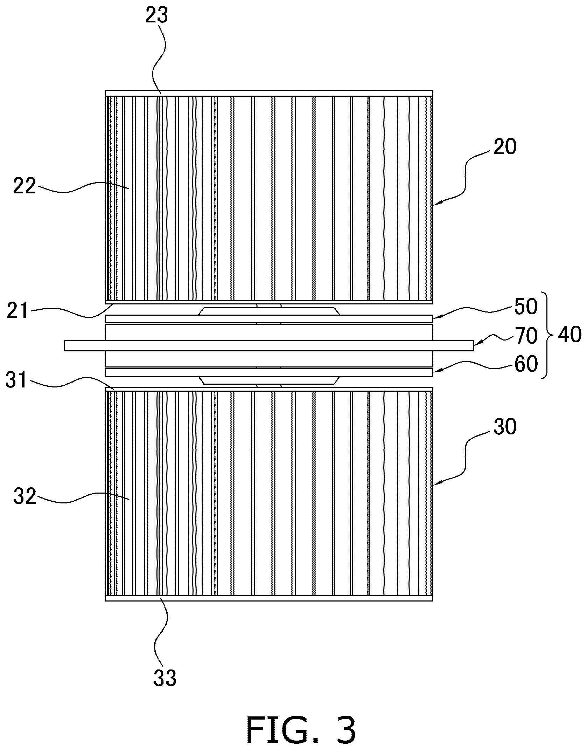

The first rotor 50 is disposed to face the end plate 21 of the first fan 20. As shown in FIG. 3, the end plate 21 of the first fan 20 is disposed in a non-contact state with the first rotor 50 of the motor 40.

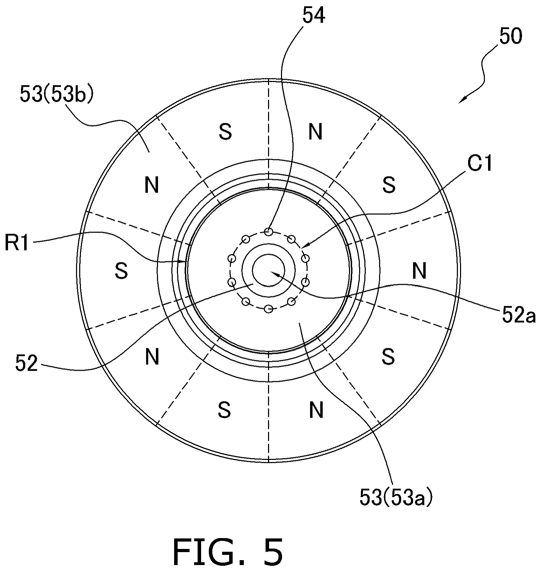

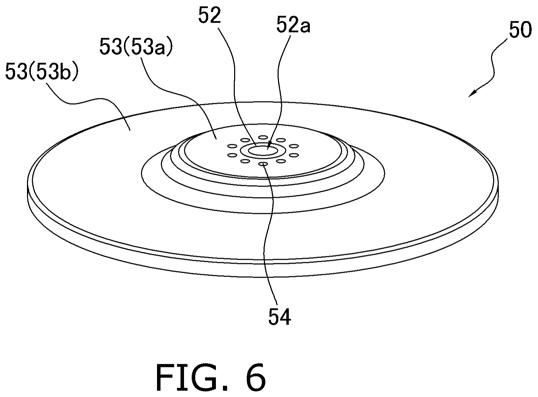

As shown in FIGS. 5 and 6, the first rotor 50 includes a boss 52 and a magnet member 53 provided on an outer periphery of the boss 52. The boss 52 is molded from metal. The boss 52 has a cylindrical shape. The boss 52 has a circular hole 52a in its central portion. The magnet member 53 is molded from a plastic magnet. The magnet member 53 has a disk shape. When the magnet member 53 is molded, the boss 52 and the magnet member 53 are integrally molded by attaching the boss 52 as an insert component to a mold. The magnet member 53 includes a protrusion 53a that does not act as a magnet and a magnet portion 53b that acts as a magnet. The protrusion 53a is a portion of the magnet member 53 that protrudes in the axial direction on the first fan 20 side and is recessed on the stator 70 side. The protrusion 53a has a circular shape when viewed from the axial direction. The boss 52 is located at a center of the protrusion 53a when viewed from the axial direction. The magnet portion 53b is located around the protrusion 53a when viewed from the axial direction. In the magnet portion 53b, as shown in FIG. 5, S poles and N poles are alternately arranged in a peripheral direction of the magnet member 53.

The second rotor 60 is disposed to face the end plate 31 of the second fan 30. As shown in FIG. 3, the end plate 31 of the second fan 30 is disposed in a non-contact state with the second rotor 60 of the motor 40.

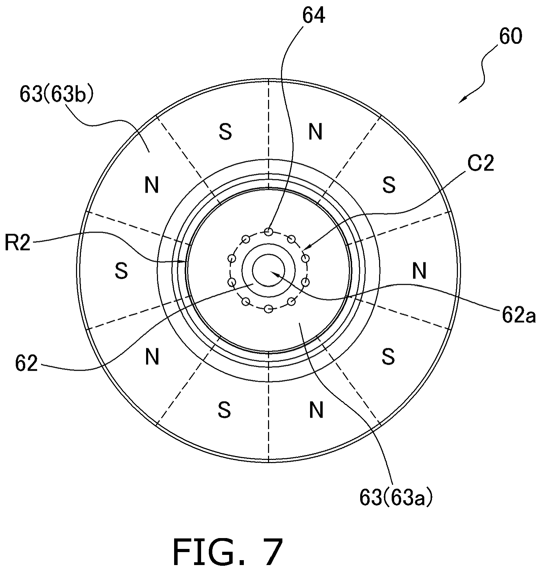

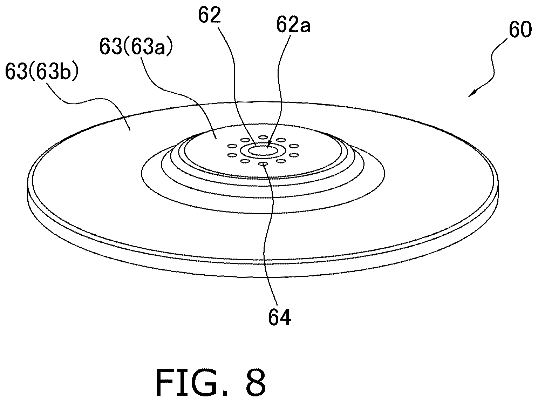

As shown in FIGS. 7 and 8, the second rotor 60 includes a boss 62 and a magnet member 63 provided on an outer periphery of the boss 62. The boss 62 is molded from metal. The boss 62 has a cylindrical shape. The boss 62 has a circular hole 62a in its central portion. The magnet member 63 is molded from a plastic magnet. The magnet member 63 has a disk shape. When the magnet member 63 is molded, the boss 62 and the magnet member 63 are integrally molded by attaching the boss 62 as an insert component to a mold. The magnet member 63 includes a protrusion 63a that does not act as a magnet and a magnet portion 63b that acts as a magnet. The protrusion 63a is a portion of the magnet member 63 that protrudes in the axial direction on the second fan 30 side and is recessed on the stator 70 side. The protrusion 63a has a circular shape when viewed from the axial direction. The boss 62 is located at a center of the protrusion 63a when viewed from the axial direction. The magnet portion 63b is located around the protrusion 63a when viewed from the axial direction. In the magnet portion 63b, as shown in FIG. 7, S poles and N poles are alternately arranged in a peripheral direction of the magnet member 63.

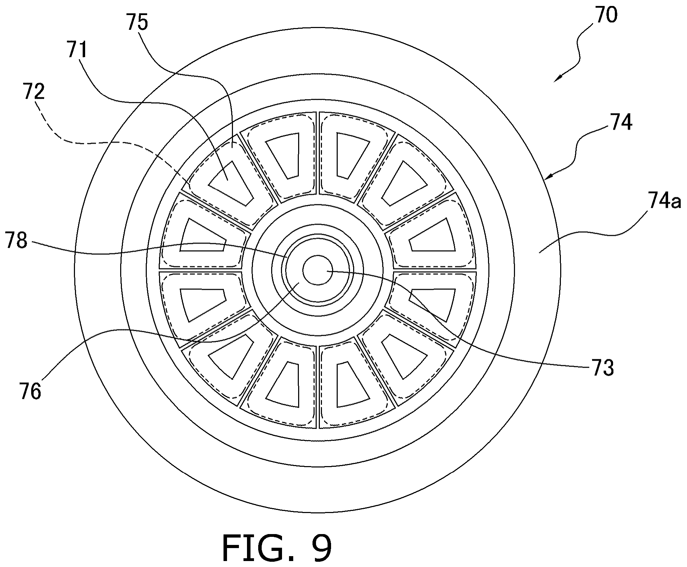

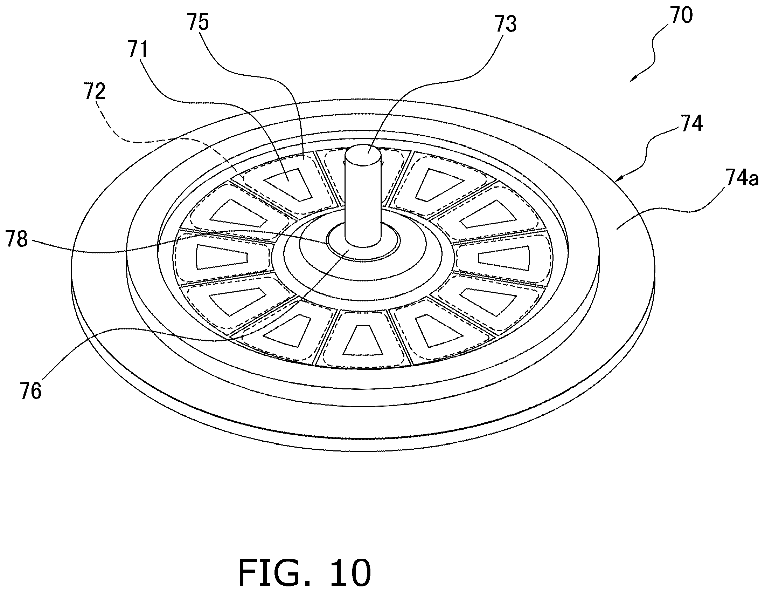

As shown in FIGS. 9 to 11, the stator 70 includes a plurality of stator cores 71, a plurality of coils 72, a shaft 73, a mold portion 74, an insulator 75, a first bearing 76, a second bearing 77, and a bearing housing 78.

The plurality of stator cores 71 are annularly arranged at intervals along a peripheral direction of the stator 70 when viewed from the axial direction. Each coil 72 is formed by winding a winding wire around each stator core 71. The insulator 75 insulates the stator core 71 from the coil 72.

The shaft 73 extends toward the first fan 20 through the circular hole 52a of the first rotor 50 along the axial direction. The shaft 73 extends toward the second fan 30 through the circular hole 62a of the second rotor 60 along the axial direction. On the side of the first fan 20, the shaft 73 is fixed to an inner peripheral surface of the boss 52 of the first rotor 50 and the end plate 21 of the first fan 20. On the second fan 30 side, the shaft 73 is fixed to an inner peripheral surface of the boss 62 of the second rotor 60 and the end plate 31 of the second fan 30. When the first rotor 50 and the second rotor 60 rotate around the axis during driving of the motor 40, the first fan 20 and the second fan 30 rotate around the axis. By the rotation of the first fan 20 and the second fan 30, air outside the housing 10 is sucked into the first suction port 11 and the second suction port 12 and discharged from the blow-out port 15.

The mold portion 74 is a disk-shaped member formed by resin molding so as to surround the stator core 71 and the coil 72. The mold portion 74 has an outer edge portion 74a protruding from a side surface of the mold portion 74. The outer edge portion 74a of the mold portion 74 is fixed by the motor fixing portion 10c of the housing 10.

The first bearing 76 is provided on the first rotor 50 side in the axial direction. The second bearing 77 is provided on the second rotor 60 side in the axial direction. The first bearing 76 and the second bearing 77 rotatably support the shaft 73. The bearing housing 78 accommodates the first bearing 76 and the second bearing 77.

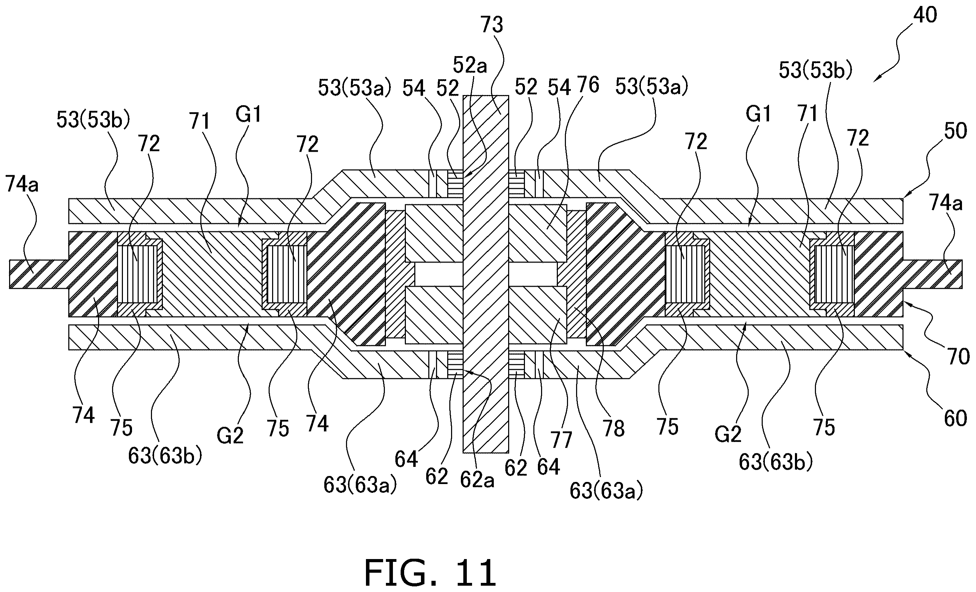

As shown in FIG. 11, the stator 70 faces the first rotor 50 across the first air gap G1 in the axial direction. The stator 70 faces the second rotor 60 across the second air gap G2 in the axial direction. The axial dimensions of the first air gap G1 and the second air gap G2 are, for example, 0.5 mm to 2 mm.

As shown in FIG. 3, the outer diameter of the stator 70 is larger than the outer diameter of the first rotor 50 and the outer diameter of the second rotor 60. As shown in FIG. 11, the outer diameter of the mold portion 74 excluding the outer edge portion 74a is substantially the same as the outer diameter of the first rotor 50 and the outer diameter of the second rotor 60.

As shown in FIG. 11, a central portion of the mold portion 74 of the stator 70 protrudes in the axial direction on the first fan 20 side in accordance with the shape of the magnet member 53 of the first rotor 50. The central portion of the mold portion 74 of the stator 70 protrudes in the axial direction on the second fan 30 side in accordance with the shape of the magnet member 63 of the second rotor 60.

### (3) Detailed configuration of first rotor 50 and second rotor 60

The first rotor 50 has a plurality of through holes 54 penetrating in the axial direction. The plurality of through holes 54 are provided in the protrusion 53a of the magnet member 53. As shown in FIG. 11, the plurality of through holes 54 is provided on a radially inner side of the first rotor 50 with respect to the coil 72 when viewed from the axial direction. The through holes 54 communicate a space between the first rotor 50 and the end plate 21 with the first air gap G1.

As shown in FIG. 5, the first rotor 50 has ten through holes 54 arranged along a circumference of a first circle C1 centered on the axis of the first rotor 50 when viewed from the axial direction. These through holes 54 have a circular shape and the same dimension (diameter) when viewed from the axial direction. The ten through holes 54 are arranged at equal intervals along a circumferential direction of the first circle C1. The diameter of the through holes 54 is, for example, 2.5 mm.

The plurality of through holes 54 is provided in a circular first region R1 centered on the axis of the first rotor 50 when viewed from the axial direction. In FIG. 5, the first region R1 is substantially the same as a region occupied by the boss 52 and the protrusion 53a of the first rotor 50. As shown in FIG. 11, the boss 52 and the protrusion 53a are located on a radially inner side of the first rotor 50 with respect to the coil 72.

The radius of the first region R1 is 40% or less of the radius of the first rotor 50. The radius of the first rotor 50 is a dimension from the axis of the first rotor 50 to an outer edge of the first rotor 50 when the first rotor 50 is viewed from the axial direction. The radius of the first region R1 is substantially equal to or smaller than the dimension from the axis of the first rotor 50 to an outer edge of the protrusion 53a when the first rotor 50 is viewed from the axial direction.

The radius of the first region R1 may be 25% or less of the radius of the first rotor 50. Alternatively, the radius of the first region R1 may be 20% or less of the radius of the first rotor 50. Alternatively, the radius of the first region R1 may be 15% or less of the radius of the first rotor 50.

The plurality of through holes 54 is provided outside the boss 52 when viewed from the axial direction. Therefore, for example, the radius of the first region R1 is preferably 5% or more of the radius of the first rotor 50.

The second rotor 60 has a plurality of through holes 64 penetrating in the axial direction. The plurality of through holes 64 are provided in the protrusion 63a of the magnet member 63. As shown in FIG. 11, the plurality of through holes 64 is provided on a radially inner side of the second rotor 60 with respect to the coil 72 when viewed from the axial direction. The through holes 64 communicate a space between the second rotor 60 and the end plate 31 with the second air gap G2.

As shown in FIG. 7, the second rotor 60 has ten through holes 64 arranged along a circumference of a second circle C2 centered on the axis of the second rotor 60 when viewed from the axial direction. These through holes 64 have a circular shape and the same dimension (diameter) when viewed from the axial direction. The ten through holes 64 are arranged at equal intervals along a circumferential direction of the second circle C2. The diameter of the through holes 64 is, for example, 2.5 mm.

The plurality of through holes 64 is provided in a circular second region R2 centered on the axis of the second rotor 60 when viewed from the axial direction. In FIG. 7, the second region R2 is substantially the same as a region occupied by the boss 62 and the protrusion 63a of the second rotor 60. As shown in FIG. 11, the boss 62 and the protrusion 63a are located on a radially inner side of the second rotor 60 with respect to the coil 72.

The radius of the second region R2 is 40% or less of the radius of the second rotor 60. The radius of the second rotor 60 is a dimension from the axis of the second rotor 60 to an outer edge of the second rotor 60 when the second rotor 60 is viewed from the axial direction. The radius of the second region R2 is substantially equal to or smaller than the dimension from the axis of the second rotor 60 to an outer edge of the protrusion 63a when the second rotor 60 is viewed from the axial direction.

The radius of the second region R2 may be 25% or less of the radius of the second rotor 60. Alternatively, the radius of the second region R2 may be 20% or less of the radius of the second rotor 60. Alternatively, the radius of the second region R2 may be 15% or less of the radius of the second rotor 60.

The plurality of through holes 64 is provided outside the boss 62 when viewed from the axial direction. Therefore, for example, the radius of the second region R2 is preferably 5% or more of the radius of the second rotor 60.

A first ratio, which is a ratio of a total area of the plurality of through holes 54 of the first rotor 50 to an opening area of an outer edge portion of the first air gap G1, is 3% or more. The first ratio means a ratio of the total area of the plurality of through holes 54 to the opening area of the outer edge portion of the first air gap G1. The total area of the plurality of through holes 54 is a total area occupied by the through holes 54 when the first rotor 50 is viewed from the axial direction. The opening area is an area occupied by the first air gap G1 when the first air gap G1 is viewed from a horizontal direction. The opening area is calculated by multiplying the axial dimension of the first air gap G1 at the outer edge of the first rotor 50 by the length of the outer edge of the first rotor 50. The length of the outer edge of the first rotor 50 is calculated by multiplying the diameter of the first rotor 50 when viewed from the axial direction by the circular constant.

The first ratio may be 10% or more. Alternatively, the first ratio may be 20% or more. The first ratio is preferably 40% or less.

A second ratio, which is a ratio of a total area of the plurality of through holes 64 of the second rotor 60 to an opening area of an outer edge portion of the second air gap G2, is 3% or more. The total area of the plurality of through holes 64 is a total area occupied by the through holes 64 when the second rotor 60 is viewed from the axial direction. The opening area is an area occupied by the second air gap G2 when the second air gap G2 is viewed from a horizontal direction. The opening area is calculated by multiplying the axial dimension of the second air gap G2 at the outer edge of the second rotor 60 by the length of the outer edge of the second rotor 60. The length of the outer edge of the second rotor 60 is calculated by multiplying the diameter of the second rotor 60 when viewed from the axial direction by the circular constant.

The second ratio may be 10% or more. Alternatively, the second ratio may be 20% or more. The second ratio is preferably 40% or less.

### (4) Characteristics

(4-1)
The axial gap-type motor 40 has the first air gap G1 between the first rotor 50 and the stator 70 and the second air gap G2 between the second rotor 60 and the stator 70. The air gaps G1 and G2 have natural frequencies. Therefore, during driving of the motor 40, due to minute vibration in the axial direction of the rotors 50 and 60, abnormal noise having a peak of a sound pressure level may occur at frequencies near the natural frequencies of the air gaps G1 and G2.

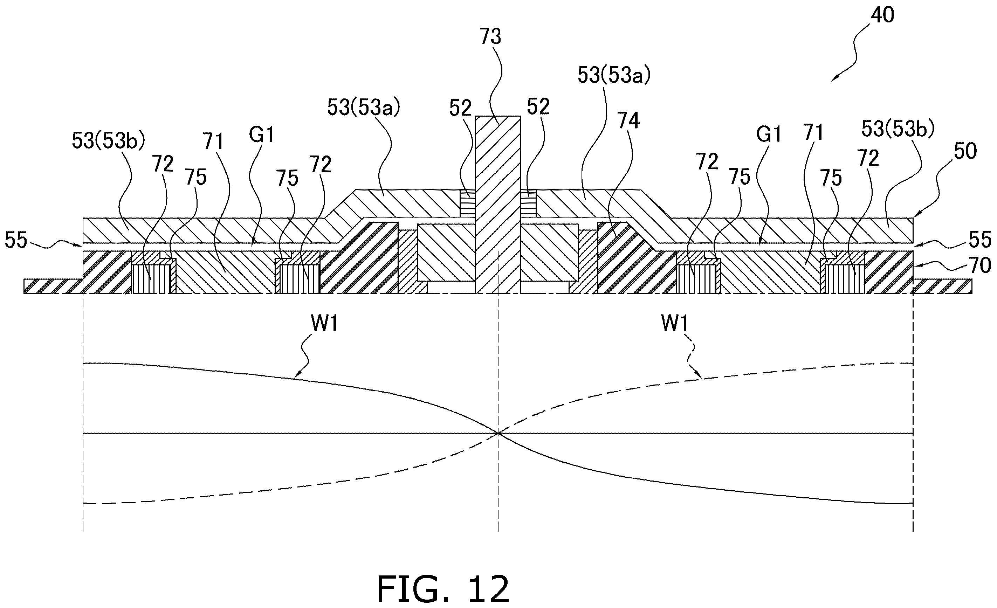

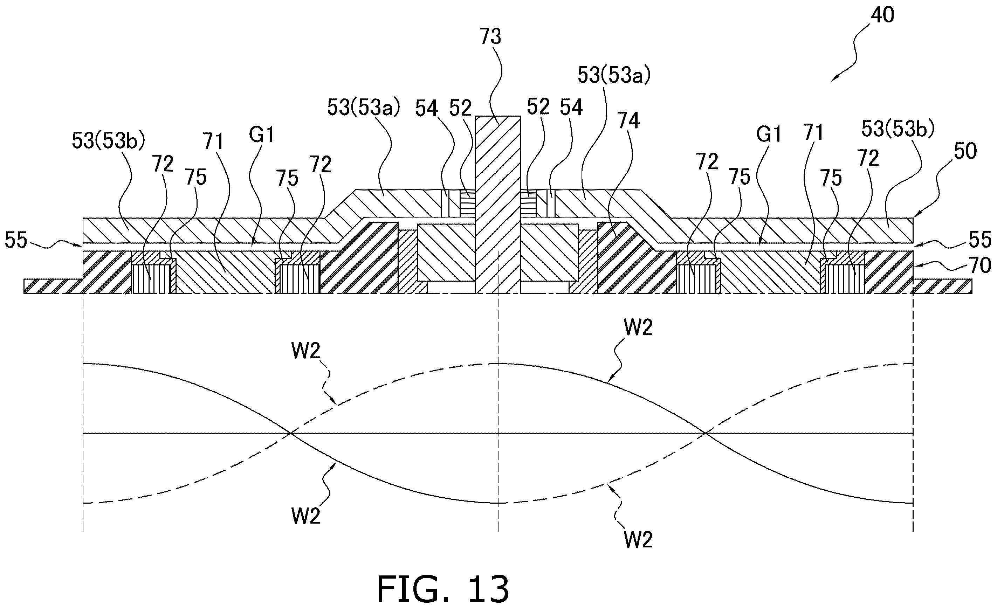

FIGS. 12 and 13 show stationary waves having the natural frequency of the first air gap G1. The stationary wave represents radial vibration of air in the first air gap G1. In a case where the air in the first air gap G1 is displaced radially outward, the amplitude of the stationary wave is positive. In a case where the air in the first air gap G1 is displaced on the radially inner side, the amplitude of the stationary wave is negative.

A first wave W1 shown in FIG. 12 represents a stationary wave in a case where the first rotor 50 does not have the through hole 54. A second wave W2 shown in FIG. 13 represents a stationary wave in a case where the first rotor 50 has the through hole 54. In FIGS. 12 and 13, the stationary wave indicated by the dotted line is 180° different in phase from the stationary wave indicated by the solid line.

In a case where the first rotor 50 does not have the through hole 54, opening ends (a portion communicating with an external space of the motor 40) of the first air gap G1 are only both ends 55 of the first air gap G1. Therefore, as shown in FIG. 12, the antinode (position where the amplitude is maximized) of the first wave W1 is located only at both ends 55 of the first air gap G1 in the radial direction of the first rotor 50. On the other hand, in a case where the first rotor 50 has the through hole 54, the opening ends of the first air gap G1 are both ends 55 of the first air gap G1 and the through hole 54. Therefore, as shown in FIG. 13, the antinode of the second wave W2 is located at both ends 55 of the first air gap G1 and at a central portion where the through hole 54 is located. Accordingly, the natural frequency of the second wave W2 is about twice the natural frequency of the first wave W1. In this manner, the natural frequency of the first air gap G1 can be changed by providing the through hole 54 near a node (a position where the amplitude becomes 0) of the first wave W1 in the radial direction of the first rotor 50. The node of the first wave W1 is located at the central portion of the first air gap G1 in the radial direction of the first rotor 50.

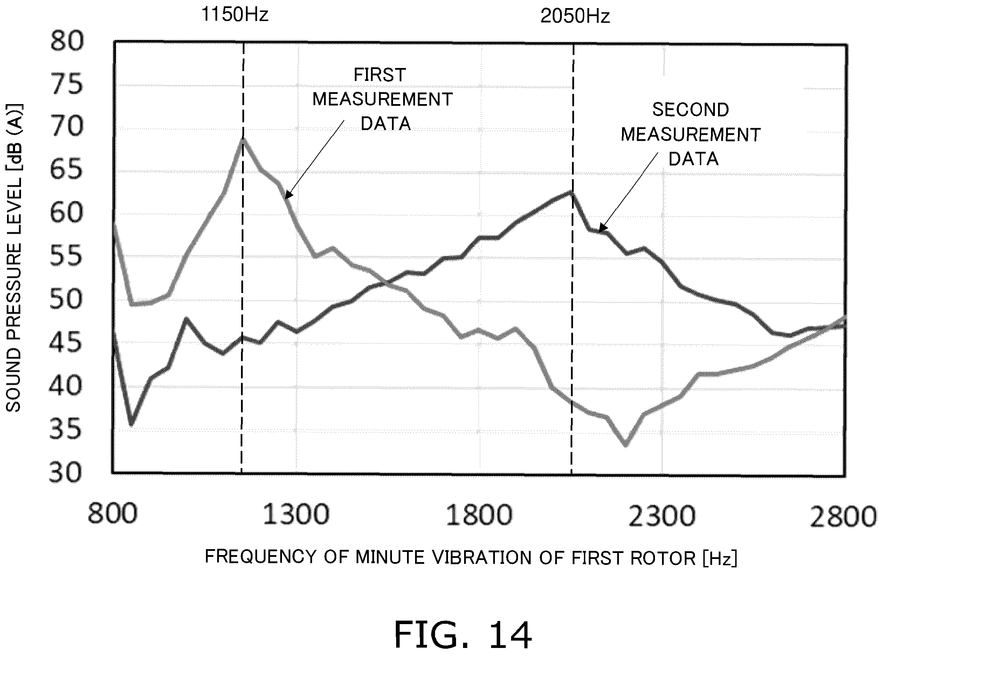

FIG. 14 shows measurement data of the sound pressure level of the abnormal noise generated in a case where the first rotor 50 is minutely vibrated by causing a minute current to flow through the coil 72 while changing the frequency with a signal generator. The horizontal axis in FIG. 14 represents the frequency of minute vibration of the first rotor 50. The vertical axis in FIG. 14 represents the sound pressure level of the abnormal noise. First measurement data represents measurement data in a case where the first rotor 50 does not have the through hole 54. Second measurement data represents measurement data in a case where the first rotor 50 has the through hole 54. In the first measurement data, the natural frequency of the first wave W1 shown in FIG. 12 is about 1150 Hz. In the second measurement data, the natural frequency of the second wave W2 shown in FIG. 13 is about 2050 Hz. Therefore, as described above, it has been observed that the natural frequency of the first air gap G1 becomes about twice by providing the through hole 54 in the first rotor 50. It has been observed that the sound pressure level at the natural frequency of 1150 Hz in a case where the first rotor 50 has the through hole 54 is lower than the sound pressure level at the natural frequency of 2050 Hz in a case where the first rotor 50 does not have the through hole 54.

Therefore, in the axial gap-type motor 40, by providing the plurality of through holes 54 in a central portion of the first rotor 50 and making the natural frequency of the first air gap G1 larger than a predetermined frequency, the abnormal noise having the peak of the sound pressure level at a frequency near the natural frequency of the first air gap G1 is reduced. Similarly, by providing the plurality of through holes 64 in a central portion of the second rotor 60 and making the natural frequency of the second air gap G2 larger than a predetermined frequency, the abnormal noise having the peak of the sound pressure level at a frequency near the natural frequency of the second air gap G2 is reduced.

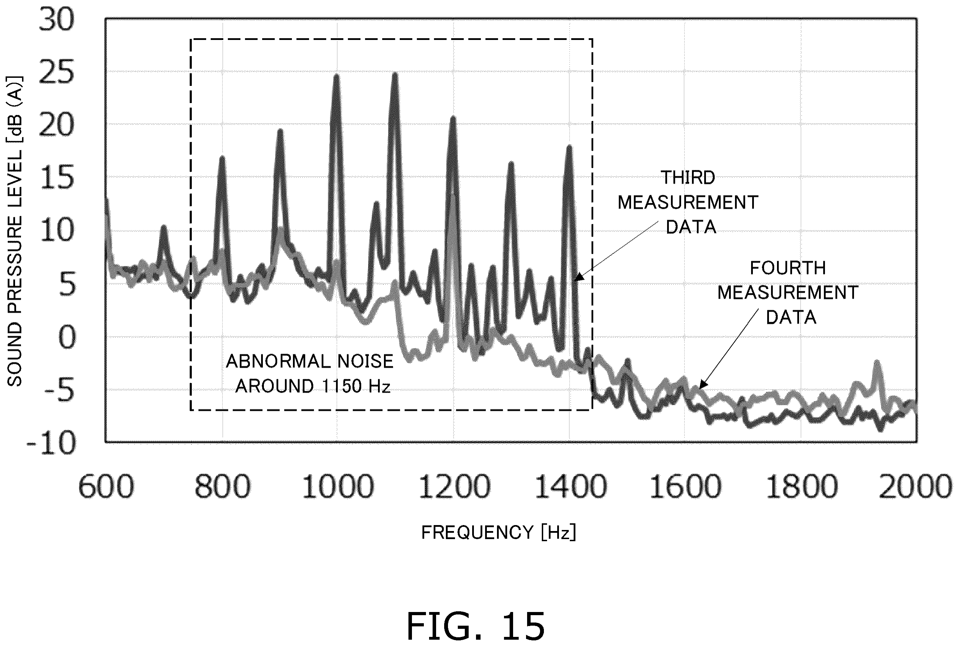

FIG. 15 shows an example of measurement data of noise generated in a case where the motor 40 is driven. Third measurement data represents measurement data in a case where the rotors 50 and 60 do not have the through holes 54 and 64. Fourth measurement data represents measurement data in a case where the rotors 50 and 60 have the through holes 54 and 64. As shown in FIG. 15, it has been observed that the values of the plurality of peaks of the sound pressure level at the frequency around 1150 Hz decrease by providing the through holes 54 and 64 in the rotors 50 and 60.

Therefore, in the axial gap-type motor 40, by providing the through holes 54 and 64 in the rotors 50 and 60, abnormal noise generated from the motor 40 is reduced.

(4-2)
By forming the opening ends of the air gaps G1 and G2 at the central portions of the rotors 50 and 60, the natural frequencies of the air gaps G1 and G2 become larger than a predetermined frequency, and the sound pressure level at a frequency near the natural frequencies decreases. Therefore, the degree of decrease in the sound pressure level at the frequency near the natural frequencies changes depending on the number, shape, and position of the through holes 54 and 64 which are the opening ends of the air gaps G1 and G2.

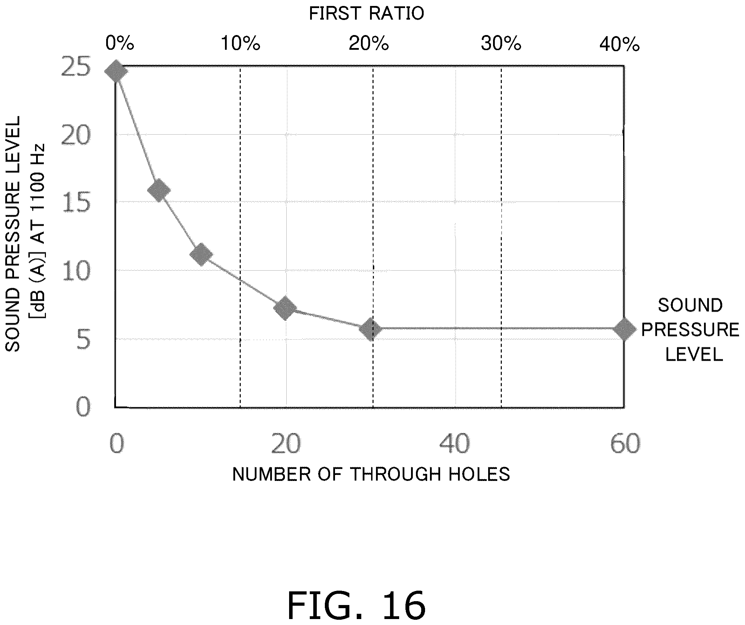

FIG. 16 shows measurement data indicating the relationship between the number of the through holes 54 of the first rotor 50 and the sound pressure level of the generated abnormal noise. The horizontal axis in FIG. 16 represents the number of the through holes 54. The vertical axis in FIG. 16 represents the sound pressure level at 1100 Hz. 1100 Hz is a frequency at which the sound pressure level of the abnormal noise generated in a case where the first rotor 50 does not have the through hole 54 is maximized. The horizontal axis of the graph of FIG. 16 shows the correspondence relationship between the number of the through holes 54 and the first ratio. Since all the through holes 54 have the same dimension, the first ratio is proportional to the number of the through holes 54. For example, in a case where the number of the through holes 54 is 60, the first ratio is 40%, and in a case where the number of the through holes 54 is 30, the first ratio is 20%. The first ratio of the measurement data ranges from 0% to 40%. FIG. 16 shows measurement data in a case where the number of the through holes 54 of the first rotor 50 is 0, 5, 10, 20, 30, and 60. As shown in FIG. 16, in a case where the number of the through holes 54 is 0, 5, 10, 20, 30, and 60, the first ratio is 0%, 3.3%, 6.7%, 13%, 20%, and 40%, respectively. The number, shape, and position of the through holes 64 of the second rotor 60 are the same as the number, shape, and position of the through holes 54 of the first rotor 50. Therefore, the second ratio is the same as the first ratio.

As shown in FIG. 16, it has been observed that the sound pressure level decreases as the first ratio, which is the ratio of the total area of the through holes 54 to the opening area of the outer edge portion of the first air gap G1, increases. As the first ratio increases from 0% to 20%, a significant decrease in the sound pressure level has been observed. Specifically, it has been confirmed that in a case where the first ratio is 3.3%, the sound pressure level is reduced by about 10dB as compared with a case where the first ratio is 0%. It has been confirmed that in a case where the first ratio is 20%, the sound pressure level is reduced by about 20dB as compared with a case where the first ratio is 0%. It has been observed that the sound pressure level does not substantially decrease as the first ratio increases from 20% to 40%.

When the first ratio exceeds 40%, the rigidity of the first rotor 50 decreases, and there is a possibility that the vibration of the first rotor 50 in the axial direction increases. Therefore, in order to ensure the rigidity of the first rotor 50, the first ratio is preferably as small as possible. On the other hand, in order to lower the sound pressure level, the first ratio is preferably as large as possible. As shown in FIG. 16, the first ratio is preferably 3.3% to 20%, more preferably 6.7% to 20%, and still more preferably 13% to 20% from the viewpoint of the rigidity of the first rotor 50 and the decrease in the sound pressure level.

Similarly, in order to ensure the rigidity of the second rotor 60, the second ratio is preferably as small as possible. On the other hand, in order to lower the sound pressure level, the second ratio is preferably as large as possible. Therefore, similarly to the first ratio, the second ratio is preferably 3.3% to 20%, more preferably 6.7% to 20%, and still more preferably 13% to 20%.

Therefore, in the axial gap-type motor 40, by appropriately setting the first ratio and the second ratio and providing the through holes 54 and 64 in the rotors 50 and 60, it is possible to effectively reduce the abnormal noise generated from the motor 40 while securing the rigidity of the rotors 50 and 60.

### -Second embodiment-

The blower 100 according to a second embodiment shares a basic configuration and operation with the blower 100 according to the first embodiment. The difference between the second embodiment and the first embodiment is the number and positions of the through holes 54 of the first rotor 50 and the through holes 64 of the second rotor 60.

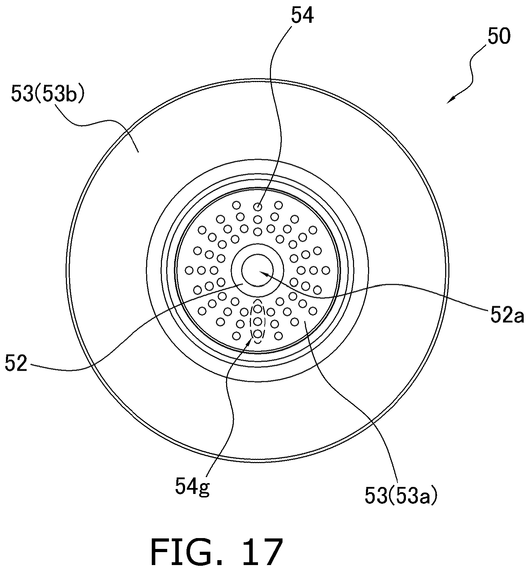

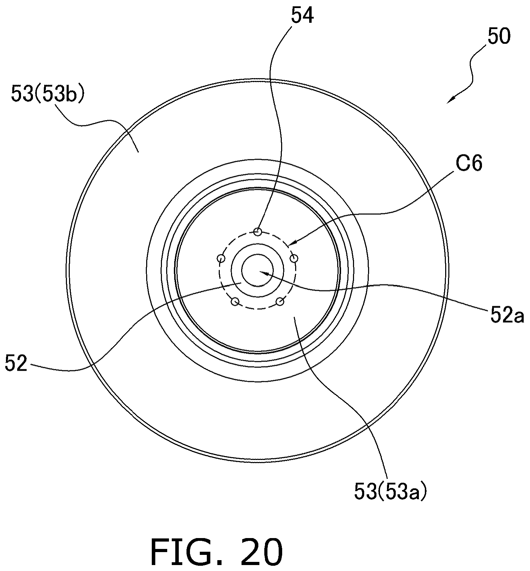

In the present embodiment, the first rotor 50 has 60 through holes 54. These through holes 54 have a circular shape and the same dimension (diameter) when viewed from the axial direction. As shown in FIG. 17, 20 through hole groups 54g each including three through holes 54 disposed along the radial direction of the first rotor 50 are disposed along the peripheral direction of the first rotor 50. In order to ensure the rigidity of the first rotor 50, the radial positions of two through hole groups 54g adjacent to each other in the peripheral direction are different by about the diameter of the through hole 54.

The plurality of through holes 64 of the second rotor 60 is disposed at the same position as the plurality of through holes 54 of the first rotor 50.

### -Third embodiment-

The blower 100 according to the third embodiment shares a basic configuration and operation with the blower 100 according to the first embodiment. The difference between the third embodiment and the first embodiment is the number and positions of the through holes 54 of the first rotor 50 and the through holes 64 of the second rotor 60.

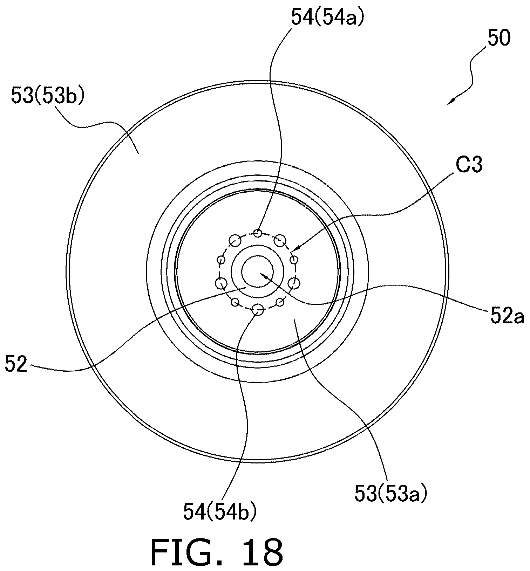

In the present embodiment, the first rotor 50 has ten through holes 54. As shown in FIG. 18, ten through holes 54 are arranged along the circumference of a third circle C3 centered on the axis of the first rotor 50 when viewed from the axial direction. These through holes 54 have a circular shape when viewed from the axial direction.

The ten through holes 54 include two types of through holes having different sizes. The ten through holes 54 include five first through holes 54a and five second through holes 54b. The diameter of the second through hole 54b is larger than the diameter of the first through hole 54a. For example, the diameter of the second through hole 54b is 1.5 times the diameter of the first through hole 54a. The ten through holes 54 are arranged at equal intervals along a circumferential direction of the third circle C3. The ten through holes 54 are arranged such that the first through holes 54a and the second through holes 54b are alternately arranged along the circumferential direction of the third circle C3.

In the present embodiment, since the two types of through holes 54 having different sizes are alternately arranged in the circumferential direction, the rigidity of the first rotor 50 can be secured while reducing the abnormal noise generated from the motor 40 by increasing the first ratio.

The plurality of through holes 64 of the second rotor 60 is disposed at the same position as the plurality of through holes 54 of the first rotor 50.

### -Fourth embodiment-

The blower 100 according to the fourth embodiment shares a basic configuration and operation with the blower 100 according to the first embodiment. The difference between the fourth embodiment and the first embodiment is the number, shapes, and positions of the through holes 54 of the first rotor 50 and the through holes 64 of the second rotor 60.

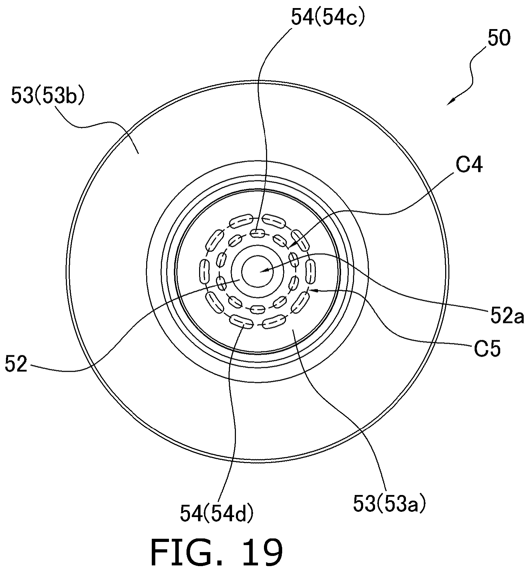

In the present embodiment, the first rotor 50 has 20 through holes 54. As shown in FIG. 19, a total of 20 through holes 54 are arranged along the circumferences of a fourth circle C4 and a fifth circle C5 centered on the axis of the first rotor 50 when viewed from the axial direction. These through holes 54 have a substantially rectangular shape extending along a circumferential direction of the fourth circle C4 and the fifth circle C5 when viewed from the axial direction. The diameter of the fifth circle C5 is larger than the diameter of the fourth circle C4.

The 20 through holes 54 include two types of through holes having different sizes. The 20 through holes 54 include ten third through holes 54c and ten fourth through holes 54d. The ten third through holes 54c are arranged at equal intervals along the circumferential direction of the fourth circle C4. The center of the third through hole 54c is located on the circumference of the fourth circle C4. The ten fourth through holes 54d are arranged at equal intervals along the circumferential direction of the fifth circle C5. The center of the fourth through hole 54d is located on the circumference of the fifth circle C5. The center of the through hole 54 is an intersection of a straight line that passes through the axis of the first rotor 50 and divides the through hole 54 into two in the peripheral direction and the fourth circle C4 or the fifth circle C5 when viewed from the axial direction.

The dimension of the fourth through hole 54d in the circumferential direction of the fifth circle C5 is larger than the dimension of the third through hole 54c in the circumferential direction of the fourth circle C4. For example, the dimension of the fourth through hole 54d in the circumferential direction of the fifth circle C5 is twice the dimension of the third through hole 54c in the circumferential direction of the fourth circle C4.

In the present embodiment, since the through hole 54 has a substantially rectangular shape extending along the circumferential direction of the fourth circle C4 and the fifth circle C5, it is possible to effectively reduce the abnormal noise generated from the motor 40 by increasing the first ratio.

As shown in FIG. 19, when viewed from the axial direction, the center of the fourth through hole 54d is not located on a straight line connecting the axis of the first rotor 50 and the center of the third through hole 54c. Similarly, when viewed from the axial direction, the center of the third through hole 54c is not located on a straight line connecting the axis of the first rotor 50 and the center of the fourth through hole 54d. By arranging the through hole 54 in this manner, rigidity of the first rotor 50 can be secured.

The plurality of through holes 64 of the second rotor 60 is disposed at the same position as the plurality of through holes 54 of the first rotor 50.

### - Modifications-

### (1) Modification A

In the above embodiment, the motor 40 includes a pair of the first rotor 50 and the second rotor 60 arranged on both sides in the axial direction of the stator 70. However, the motor 40 may include only the first rotor 50. In this case, the blower 100 may include both the first fan 20 and the second fan 30, or may include only the first fan 20.

### (2) Modification B

In the above embodiment, the first fan 20 and the second fan 30 are, for example, sirocco fans. However, the above embodiment may be applied to a blower including another type of fan.

### (3) Modification C

In a case where the plurality of through holes 54 and 64 are arranged side by side in the peripheral direction of the rotors 50 and 60, it is preferable that the through holes 54 and 64 are arranged such that the region occupied by the through holes 54 and 64 in the peripheral direction is as large as possible. In this case, the areas of the opening ends of the air gaps G1 and G2 located in the central portions of the rotors 50 and 60 increase, and the natural frequencies of the air gaps G1 and G2 increase, and the sound pressure level tends to decrease.

Specifically, as shown in FIG. 5, in a case where the plurality of through holes 54 is arranged along the circumference of the first circle C1 such that a center of each of the through holes 54 is located on the circumference of the first circle C1, a third ratio is preferably a predetermined value or more. The third ratio is a ratio of a total length of the plurality of through holes 54 in the circumferential direction of the first circle C1 to the length of the circumference of the first circle C1. The third ratio increases as the region occupied by the through holes 54 and 64 in the peripheral direction of the rotors 50 and 60 increases. Therefore, the sound pressure level tends to decrease as the third ratio increases. The third ratio is preferably 0.1 or more, and more preferably 0.2 or more.

### (4) Modification D

FIG. 16 shows measurement data in a case where the number of the through holes 54 of the first rotor 50 is 0, 5, 10, 20, 30, and 60. The shapes of the through holes 54 when viewed from the axial direction are all circular. The dimensions of the through holes 54 are all the same.

FIGS. 5 and 17 show the arrangement of the through holes 54 in cases where the number of the through holes 54 is 10 and 60, respectively. Next, a specific example of the arrangement of the through holes 54 in cases where the number of the through holes 54 is 5, 20, and 30 will be described.

### (4-1) Modification D-1

FIG. 20 shows the arrangement of the through holes 54 in a case where the number of the through holes 54 is 5. The first rotor 50 has five through holes 54 disposed along the circumference of a sixth circle C6 centered on the axis of the first rotor 50 when viewed from the axial direction. The five through holes 54 are arranged at equal intervals along a circumferential direction of the sixth circle C6.

### (4-2) Modification D-2

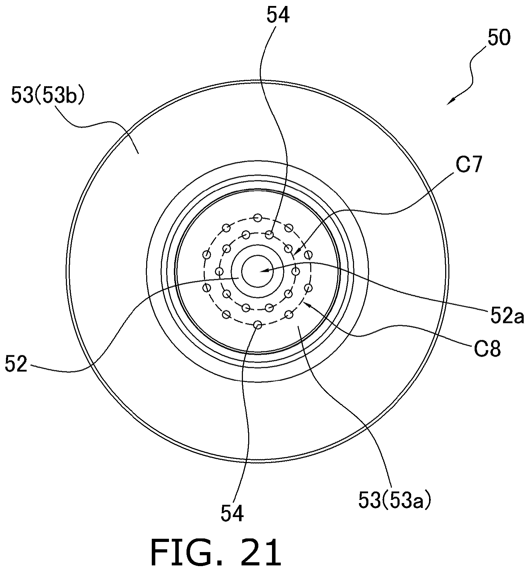

FIG. 21 shows the arrangement of the through holes 54 in a case where the number of the through holes 54 is 20. In the first rotor 50, a total of 20 through holes 54 are arranged along the circumferences of a seventh circle C7 and an eighth circle C8 centered on the axis of the first rotor 50 when viewed from the axial direction. The diameter of the eighth circle C8 is larger than the diameter of the seventh circle C7. The ten through holes 54 are arranged at equal intervals along a circumferential direction of the seventh circle C7. The ten through holes 54 are arranged at equal intervals along a circumferential direction of the eighth circle C8.

When viewed from the axial direction, the center of the through hole 54 on the eighth circle C8 is not located on a straight line connecting the axis of the first rotor 50 and the center of the through hole 54 on the seventh circle C7. Similarly, when viewed from the axial direction, the center of the through hole 54 on the seventh circle C7 is not located on a straight line connecting the axis of the first rotor 50 and the center of the through hole 54 on the eighth circle C8.

The 20 through holes 54 may be arranged at equal intervals along the circumferential direction of the seventh circle C7.

### (4-3) Modification D-3

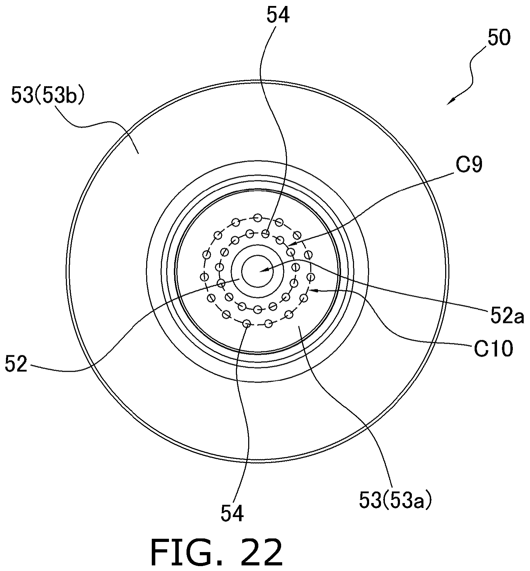

FIG. 22 shows the arrangement of the through holes 54 in a case where the number of the through holes 54 is 30. In the first rotor 50, a total of 30 through holes 54 are arranged along the circumferences of a ninth circle C9 and a tenth circle C10 centered on the axis of the first rotor 50 when viewed from the axial direction. The diameter of the tenth circle C10 is larger than the diameter of the ninth circle C9. The 15 through holes 54 are arranged at equal intervals along a circumferential direction of the ninth circle C9. The 15 through holes 54 are arranged at equal intervals along a circumferential direction of the tenth circle C10.

When viewed from the axial direction, the center of the through hole 54 on the tenth circle C10 is not located on a straight line connecting the axis of the first rotor 50 and the center of the through hole 54 on the ninth circle C9. Similarly, when viewed from the axial direction, the center of the through hole 54 on the ninth circle C9 is not located on a straight line connecting the axis of the first rotor 50 and the center of the through hole 54 on the tenth circle C10.

The 30 through holes 54 may be arranged at equal intervals along the circumferential direction of the ninth circle C9.

In this modification, the plurality of through holes 64 of the second rotor 60 is disposed at the same position as the plurality of through holes 54 of the first rotor 50.

### -Conclusion-

Although the embodiments of the present disclosure have been described above, it will be understood that various changes in form and details can be made without departing from the gist and scope of the present disclosure disclosed in claims.

### REFERENCE SIGNS LIST

20: first fan (fan)
30: second fan (fan)
40: axial gap-type motor (motor)
50: first rotor (rotor)
54: through hole
60: second rotor (rotor)
64: through hole
70: stator
71: stator core
72: coil
100: blower
G1: first air gap (air gap)
G2: second air gap (air gap)
R1: first region
X: axial direction of rotor

### CITATION LIST

### PATENT LITERATURE

Patent Literature 1: JP 2006-353078 A

## Claims

1. An axial gap-type motor (40) comprising:
a rotor (50, 60) having a disk shape; and
a stator (70) facing the rotor across an air gap (G1, G2) in an axial direction (X) of the rotor, wherein
the stator includes a plurality of stator cores (71) arranged in an annular shape when viewed from the axial direction, and a coil (72) wound around each of the stator cores,
the rotor has a plurality of through holes (54, 64) penetrating in the axial direction,
and
the plurality of through holes is provided on a radially inner side of the rotor with respect to the coil when viewed from the axial direction.

2. The axial gap-type motor according to claim 1, wherein
the plurality of through holes is provided in a first region (R1) having a circular shape centered on an axis of the rotor when viewed from the axial direction, and
a radius of the first region is 40% or less of a radius of the rotor.

3. The axial gap-type motor according to claim 1 or 2, wherein a first ratio that is a ratio of a total area of the plurality of through holes to an opening area of an outer edge portion of the air gap is 3% or more.

4. The axial gap-type motor according to claim 3, wherein the first ratio is 10% or more.

5. The axial gap-type motor according to claim 3, wherein the first ratio is 20% or more.

6. The axial gap-type motor according to any one of claims 3 to 5, wherein the first ratio is 40% or less.

7. The axial gap-type motor according to any one of claims 1 to 6, wherein the plurality of through holes is arranged along a circumference of a first circle such that a center of each of the through holes is located on the circumference of the first circle centered on the axis of the rotor when viewed from the axial direction.

8. The axial gap-type motor according to any one of claims 1 to 7, further comprising a pair of the rotors and the stator sandwiched between the pair of the rotors.

9. A blower (100) comprising:
the axial gap-type motor (40) according to any one of claims 1 to 8; and
a fan (20, 30) driven by the axial gap-type motor.

10. An air conditioner comprising the blower (100) according to claim 9.
